# EUROPÄISCHE PATENTANMELDUNG

(11) **EP 2 579 013 A1**
(43) Veröffentlichungstag der Anmeldung: **10.04.2013**
(21) Anmeldenummer: 11184445.2
(22) Anmeldetag: 07.10.2011
(51) Int. Cl.: G01L 9/00, G01L 19/06, H01B 17/30

(54) **Erfindung betreffend druckbeaufschlagte Stromdurchführungen**

(71) Anmelder: Technische Universität Darmstadt, 64283 Darmstadt (DE)
(72) Erfinder: Werthschützky, Prof. Dr.-Ing. Roland, 14523 Kleinmachnow (DE); Patrick, Heinickel, 63811 Stockstadt am Main (DE); Kober, Timo, 63128 Dietzenbach (DE); Wang, Yu, 64287 Darmstadt (DE)
(74) Vertreter: Stumpf, Peter

(57) **Zusammenfassung**

Die Erfindung betrifft eine elektrische Durchführung mit umgebender Isolierung, insbesondere für einen Drucksensor, wobei die Durchführung auf der Hochdruckseite einen Isolatorbereich mit mindestens einer Durchführung für mindestens einen elektrischen Leiter aufweist und welche auf der Hochdruckseite mindestens eine die Fläche der Bohrungsöffnung abdeckende und zumindest teilweise auch überdeckende elektrisch leitende Elektrode aufweist. Diese neuartige Stromdurchführung, sowie Herstellverfahren zu dieser, ist für die Anwendung unter sehr hohem Druck von bis zu 5.000 bar und darüber hinaus geeignet.

## Beschreibung

Die vorliegende Erfindung betrifft das Feld der Stromdurchführungen durch Trennbereiche, welche einen Hochdruck- (von 5.000 bar und bis zu 6.000 bar und darüber) von einem Bereich deutlich geringeren Drucks (i.W. Luftdruck) abtrennen.

Zur Messung mechanischer Größen müssen häufig elektrisch leitende Verbindungen an Messelemente geführt werden. Am Beispiel der Druckmessung bedeutet dies, dass für den Normaldruckbereich (1 bar bis 100 bar) ein kostengünstiges Standardbauteil vorhanden ist. Diese gängigen "Glasdurchführungen" bestehen aus metallischen Kontaktstiften, die in einem Metallkörper elektrisch isoliert eingeglast sind (Bild 1). Somit stellen diese Bauteile die Funktion der elektrischen Verbindung bei gleichzeitiger Abdichtung zum Umgebungsdruck sicher.

Im Rahmen eines Forschungsprojekts wurde an der Technischen Universität Darmstadt ein überlastfester Hochdrucksensor auf Basis eines Silizium-Messelementes zur Messung von Druck bis mindestens 5.000 bar (500 MPa oder ca. 72.500 psi) und mehr entwickelt [1]. Das Ziel war die Entwicklung eines kostengünstigen Hochdruck-Sensors. Die niedrigen Kosten des Messelementes werden durch die Anwendung des neuartigen mechanischen Verspannungsprinzips des Verbundelements aus Silizium und Glas durch Fertigung auf Wafer-Level erreicht.

Im Rahmen des Projekts wurden Stromdurchführungen zur Kontaktierung des Hochdruck-Messelementes benötigt.

### Stand der Technik

Im Stand der Technik sind unter den kommerziell erhältlichen Durchführungen mehrere bekannt, welche Stabilität bei höheren Drücken, von bis zu 100, oder 1000 oder gar 3.500 bar aufweisen. Jedoch ist keine Durchführung bekannt, welche mit vergleichbaren Abmessungen eine Druckstabilität von bis zu 5.000 und darüber bis zu rund 6.000 bar aufweist.

Aus der EP 1 369 879 B1 ist eine Durchführung der Firma IL Metronik bekannt, welche zwar eine Stabilität bis zu 3.500 bar aufweist, dabei aber sehr aufwändig in der Herstellung ist, da in dieser ein sehr präzise konisch zu schleifender Isolationskörper verwendet wird, dessen Konuswinkel sich zur Hochdruckseite hin öffnet.

Um die Druckstabilität von Glasdurchführungen nach dem Stand der Technik zu untersuchen und Schwachstellen der Glasdurchführung zu ermitteln, wurden mehrere Versuche unternommen.

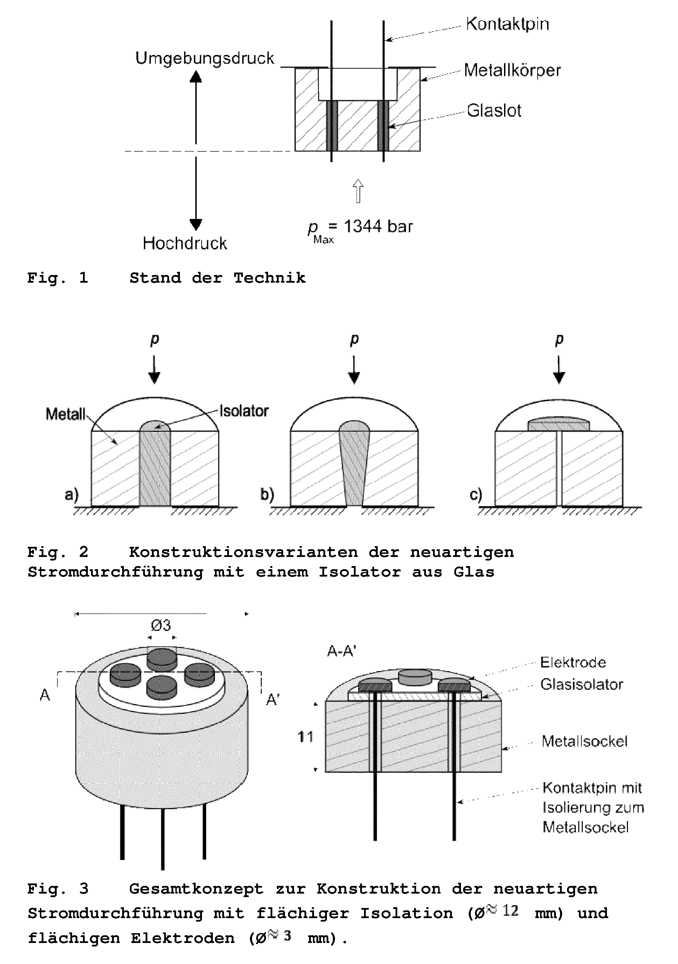

Fig. 1 zeigt eine typische Glasdurchführung nach dem Stand der Technik. Diese Durchführung wurde mit statischem Hochdruck in einem Bersttest belastet und zerstört.

Bei einem Druck von rund 1.100 bis 1.500 und in diesem Beispiel bei pmax = 1.344 bar wird die Glasdurchführung zerstört. Dabei wird ein Kontaktstift aus der Glasdurchführung herausgedrückt. Die Glasisolation (Glaslot) ist die Schwachstelle der Stromdurchführung. An der Innenwand des Metallkörpers bleibt ein Teil des restlichen Glaslots zurück. Die Mantelfläche des Kontaktstiftes weist keine Glaslot-Rückstände auf. Die Haftung des Glaslots, sowohl auf dem Kontaktpin als auch auf dem Metallkörper, ist somit nicht ausreichend.

In vielen Anwendungsgebieten bei Hydraulikanwendungen und Hochdrucksensoren können die Glasdurchführungen nach dem Stand der Technik die Anforderungen an Druckbelastbarkeit, Temperaturstabilität und chemische Beständigkeit in Kombination nicht erfüllen. Die Anforderungen an die neuentwickelte Stromdurchführung orientieren sich an den Spitzenwerten vorhandener Durchführungen um diese zu erreichen oder zu übertreffen. Die Kernanforderungen an diese neuartige kostengünstige Stromdurchführung zeigt Tabelle 1.

**Tabelle 1 Kernanforderungen an die neuartige Stromdurchführung für den Hochdruckbereich**

| Anforderung | Wert | Einheit |
|---|---|---|
| *P*Berst | >5.000 | bar |
| *R*_{Isolation} | >10¹¹ | Ω |
| *U*_{Isolation} | >100 | V |

Aufgrund der enormen Druckstabilität mussten auch neuartige Herstellungsverfahren zur Verbindung von Isolatoren und der aufgrund der hohen Druckstabilität häufig noch unverzichtbaren Metallelemente in einer solchen Stromdurchführung erprobt werden. Wie oben geschildert ist Glas als Vollkörper nicht druckstabil genug.

### Aufgabe

Aufgabe der vorliegenden Erfindung ist es daher eine Stromdurchführung und Verfahren zu deren Herstellung vorzusehen, welche günstiger in der Herstellung und/oder wesentlich höhere Drücke, von bis zu 5.000 bar oder 6.000 bar und darüber hinaus, sowie mittlerweile technisch vorkommende Druckschwankungen von einigen 1.000 bar, ohne Beschädigung verkraften.

### Lösung der Aufgabe

Es konnte gefunden werden, dass die Stromdurchführung gemäß den Merkmalen von Anspruch 1 diese Aufgabe lösen. Ein Herstellverfahren zur Realisierung dieser neuartigen Stromdurchführung offenbar Anspruch 5.

Im Folgenden werden grob die Schritte zur Konstruktion der neuartigen Stromdurchführung und einige Ergebnisse der rund 100 Vor-Versuche dargestellt.

Die Isolationsmaterialien müssen mit den elektrischen Kontaktpins und dem für die mechanische Stabilität und Abdichtung benötigtem Metallgehäuse verbunden werden. Die Kontaktfläche von Kontaktpin und Isolationsmaterial sowie die Kontaktfläche von Isolationsmaterial und Gehäuse müssen bis mindestens 5.000 bar dicht und mechanisch stabil sein.

Fig. 2. zeigt die Konstruktionsvarianten a), b) und c) von Metallgehäuse und Glasisolator.

Die Variante a) nach Fig. 2 entspricht der im Bersttest angewendeten Glasdurchführung. In diesem Fall wird die Verbindung der Glasisolation auf Scherung beansprucht, und beim Druck von 1.100 bis 1.500 bar und in diesem speziellen Beispiel von 1.344 bar zerstört. Um diesen ungünstigen Fall der senkrecht in Bezug auf die Haftkraft wirkenden Belastung am Isolator zu reduzieren, wird der Isolator kegelförmig als Variante b) in Fig.2 ausgeführt. Einen neuartigen Ansatz zeigt Variante c), indem eine flächige Isolation eingesetzt wird. Hier wirkt die Belastung in die gleiche Richtung wie die Haftkraft und drückt somit die Isolation an den Grundkörper an. Die Konstruktionsvariante c) unterstützt bei Belastung konstruktionsbedingt die Haftkraft und die Dichtigkeit. Aufgrund dieser vorteilhaften Konstruktion im Vergleich zum Stand der Technik, wird Variante c) nach Bild 2 weiterverfolgt.

Das Fügen des elektrischen Leiters mit der Isolation ähnelt dem gezeigten Problem der Kombination von Isolation und Metallgehäuse. So wird ebenfalls das schichtweise Aufeinanderbringen von elektrischem Kontaktmaterial auf den Isolator wie Variante c) ausgewählt. Es ergibt sich nach Fig. 3 ein Gesamtkonzept für die neuartige hochdruckfeste Stromdurchführung.

Das Unterscheidungsmerkmal der neuartigen Konstruktionsvariante für die Stromdurchführung im Vergleich zum Stand der Technik ist der flächige Schichtaufbau, der mit mikrotechnischen Prozessen fertigbar ist und hinsichtlich der auftretenden mechanischen Spannungen optimiert ist.

Die Komponenten der elektrischen Durchführung sollen grundsätzlich aus elektrischen Kontakten und Isolatoren bestehen. Für elektrische Durchführungen werden unterschiedliche Materialien als elektrische Kontaktpins und Isolator verwendet, jedoch ist die Auswahl der Materialien für den Hochdruckbereich bis 5.000 bar und darüber hinaus, stark begrenzt.

Als mikrotechnisches Verbindungsverfahren hat sich das Anodische Bonden von Silizium und Glas vor allem wegen der Robustheit und Zwischenschichtfreiheit bewährt. Ähnlich wie das Anodische Bonden von Silizium und Glas existieren auch Metalle, die mit Glas Anodisch bondbar sind [2]. Als Funktionsmaterial für die Kontaktpins der neuartigen Stromdurchführung ist Metall als elektrischer Leiter besser geeignet als der Halbleiter Silizium. Ebenso ist Metall als Konstruktionsmaterial für das Gehäuse als mechanisch belastetes Teil mit Dichtfunktion vorzuziehen. In der Literatur werden vor Allem Nickellegierungen wie Invar oder Kovar, aber auch spezielle Titanlegierungen als Anodisch bondbare Metalle genannt [3].

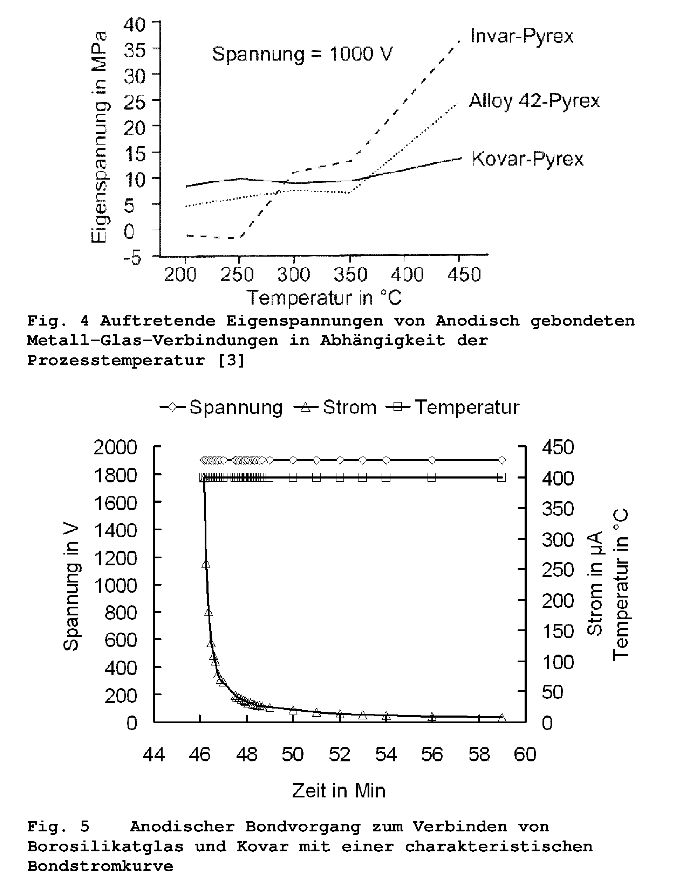

Fig. 4 zeigt die beim Anodischen Bonden auftretenden Eigenspannungen verschiedener Metall-Glas-Verbindungen in Abhängigkeit der Prozesstemperatur. Wie beim Anodischen Bonden von Silizium und Glas fällt die gesamte Bondspannung über der Raumladungszone und dem Luftspalt zwischen Metall und Glas ab. Dadurch entstehen sehr hohe elektrostatische Kräfte, die die Metall- und Glasoberfläche auf atomaren Abstand zusammenpressen, so dass sich chemische Bindungen durch Sauerstoffbrücken in Form von Fe-O-Si bilden.

Beim Anodischen Bonden bei 400°C wird Kovar als Metall verwendet, aufgrund der geringsten auftretenden Eigenspannung. Als Isolator wird Borofloat 33 von SCHOTT, das Pyrex sehr ähnlich ist, verwendet. Erst gezielte Vorbereitungen der Bondoberflächen ermöglichen einen erfolgreichen Vorgang des Anodischen Bondens. Es muss eine geringe Oberflächenrauigkeit sichergestellt sein. Durch Polieren wird eine Oberflächenrauigkeit von *Rₜ* < 150 nm (Messweg 2 mm) gewährleistet. Der abschließende Reinigungsprozess der Bondoberflächen und das Zusammenbringen der Bondpartner ohne Einschluss von Partikeln unter Reinraumbedingungen ist ebenfalls ausschlaggebend für eine gute Verbindungsqualität.

Fig. 5 zeigt eine zeitbasierte Darstellung der Parameter Temperatur, Spannung und Strom während des Anodischen Bondens. Die für den Anodischen Bondvorgang charakteristische Stromkurve ist mit den bekannten Stromkurven beim Bonden von Silizium und Glas vergleichbar. Bei den experimentell ermittelten, aussichtsreichsten Bondparametern von 400°C und 1900 V ergibt sich ein anfänglicher Stomfluss von maximal 400 pA (Fig. 5). Der Strom fällt anhand der charakteristischen Bondstromkurve ab. Das Erreichen dieses Endwertes des Stromflusses nach ca. 10 Minuten zeigt den Abschluss eines erfolgreichen Bondvorganges.

Ein Zugtest der Anodisch gebondeten Verbindung zeigt die mechanische Stabilität der Verbindungstechnologie. Bei einer Zugbelastung von 6,3 MPa zerreißt das Glas, während die Verbindungsstelle unversehrt bleibt. Die Anodisch gebondete Verbindungsstelle ist somit stabiler als das schwächste Ausgangsmaterial.

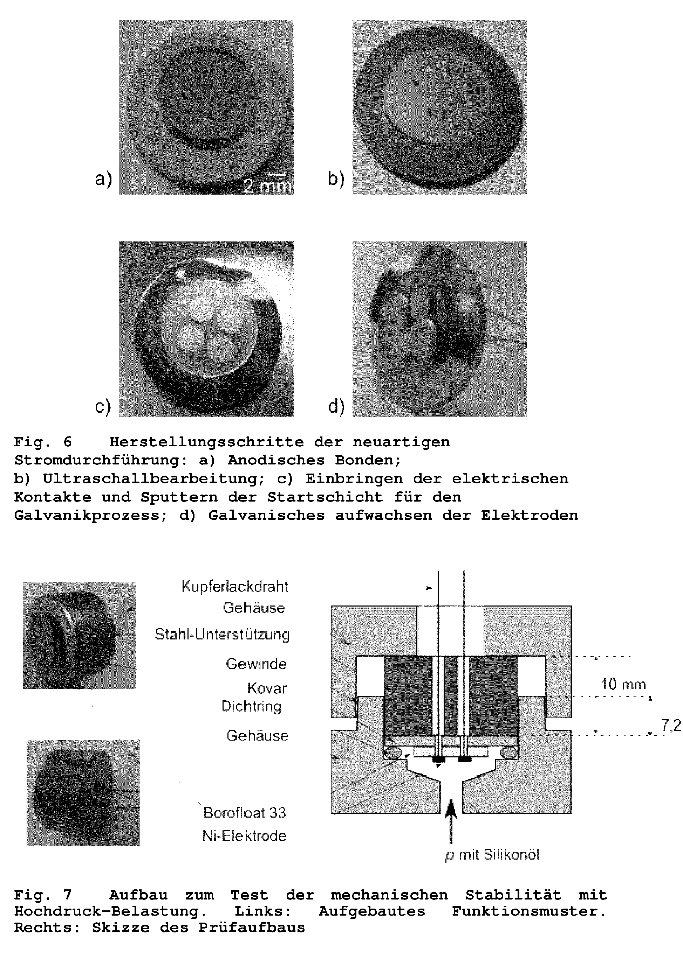

Fig. 6 zeigt den schrittweisen Herstellungsprozess der Funktionsmuster der neuartigen Stromdurchführung für den Hochdruckbereich. Das Anodische Bonden von Kovar und Glas wird für die Verbindung des Glasisolators auf das Metallgehäuse genutzt. Nach Fig. 6a wird der Glasisolator auf den Grundkörper aus Kovar, das bereits mit vier Bohrungen zur Kontaktdurchführung versehen ist, gebondet. Anschließend werden die Durchgangsbohrungen im bereits gebondeten Glas mittels Ultraschallbearbeitung eingebracht (Fig. 6b). Dieses Vorgehen spart den Allignmentprozess zwischen Kovar und Glas.

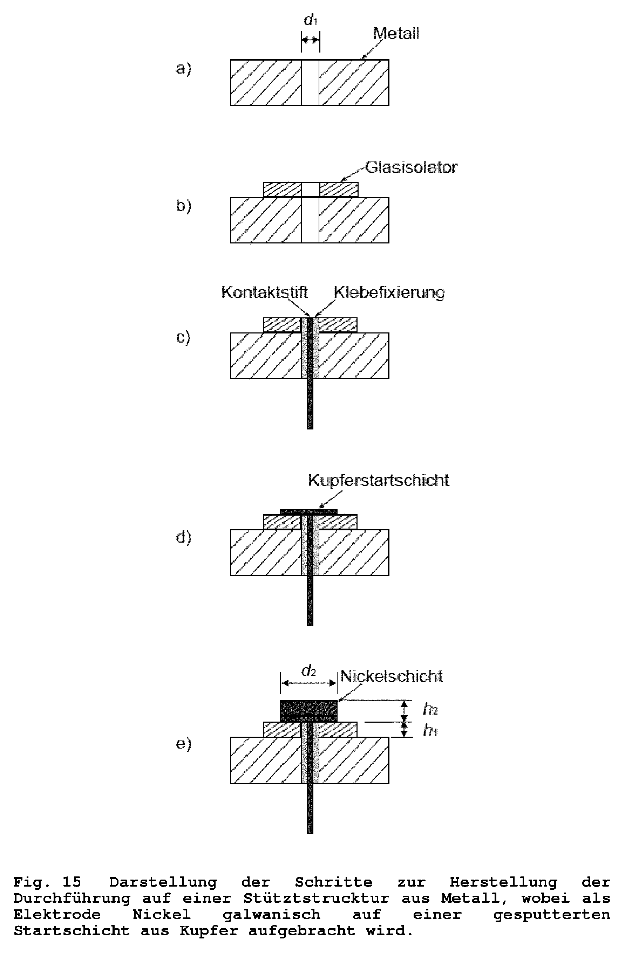

Das Aufbringen der Elektroden auf den Isolator mittels zweiseitigem Anodischen Bonden ist bei Wahl von Kovar als Elektrodenmaterial ebenfalls möglich. Der zweite Bondvorgang mit entgegen gesetzter Stromrichtung erfordert die mechanische Bearbeitung und Bereitstellung der Elektroden. Diese zeitintensiven Vorbereitungsschritte zum Polieren und Reinigen der Oberflächen, wie auch das Allignment können durch einen Galvanikschritt zum Aufwachsen der Elektroden eingespart werden. Um eine nachträgliche Kontaktierung der Elektroden in der Bohrung bei gleichzeitiger Isolation gegen das Metallgehäuse einzusparen, wird die Kontaktierung direkt in den Galvanikprozess integriert. Isolierte Kupferlackdrähte werden in die Durchgangsbohrungen eingebracht und direkt beim Sputtern der für die Galvanik benötigten Kupfer-Startschicht kontaktiert und befestigt (Fig. 6c). Die Elektrodengeometrie wird durch eine Maskierung beim Sputterprozess festgelegt. Die im Folgeschritt galvanisch abgeschiedenen Nickelelektroden (Fig. 6d) sind nach dem galvanischen vergolden direkt mittels Drahtbonden kontaktierbar. Den gesamten Prozessablauf zeigt auch Fig. 15.

Die nach dem Prozess in Fig. 6 hergestellten Durchführungen werden mechanisch und elektrisch geprüft. Da das verwendete Kovarblech mit einer Dicke von 1 mm der flächigen Druckbelastung bei 5.000 bar nicht standhält, wird es mittels einer adaptierten Stahl-Unterstützung nach Fig. 7 verstärkt. Die Gesamtadaption an die Prüfplätze zur statischen und zyklischen Druckbelastung erfolgt mittels eines Gehäuses zur Aufnahme der Stromdurchführung.

Die statische Druckbelastung erfolgt am Hochdruck-Messplatz mittels Silikonöl als Druckkopplungsmedium. So wirkt der erzeugte Druck auf die neuartige Durchführung. Ein Referenzsensor zeichnet die Belastungen auf. Nach Bild 8 wird die statische Belastung von 5.000 bar für ca. 5 Minuten gehalten. Das Funktionsmuster der neuartigen Durchführung weist die geforderte mechanische Stabilität auf und zeigt keine Undichtigkeit.

Ein weiterer mechanischer Belastungstest wird in Form von zyklischen Lastwechseln durchgeführt. Hierzu wirkt ein sinusförmiger Druck mit einer Amplitude von 1.000 bar für 60 Minuten bei einer Frequenz von 10 Hz auf die Durchführung.

Die neuartige Durchführung hat sowohl den statischen Drucktest bei 5.000 bar wie auch die 36.000 Lastwechsel bei 1.000 bar ohne messtechnisch oder optisch erkennbare Einschränkungen bestanden.

Der Kontaktwiderstand einer Durchführung ist kleiner 1 Ω, wobei hier der größte Anteil des Widerstandes auf den Kupferlackdraht mit kleinem Querschnitt fällt. Der Isolationswiderstand zwischen Elektrode und Glassockel bzw. der Elektroden untereinander ist jeweils größer als 20 MΩ.

Da das neuartige Prinzip an den aufgebauten Funktionsmustern erfolgreich gezeigt werden konnte, sollen weitere Designoptimierungen vorgenommen werden. Besonders die Miniaturisierung der Stromdurchführung kann durch lasergefertigte Durchgangsbohrungen mit maximal 50 µm Durchmesser die Druckstabilität signifikant steigern. Damit wären dann Druckstabilitäten von deutlich mehr als 5.000 bar, ggf. sogar bis 10.000 bar möglich. Die Batch-Kompatibilität des Herstellungsprozesses und die damit verbundene Steigerung und Sicherung der reproduzierbaren Qualität soll sichergestellt werden.

Weitere vorteilhafte -nicht graphisch dargestellte- Ausführungsbeispiele werden im Folgenden erläutert.

Um die elektrische Durchführung zu realisieren, wird das anodische Bonden von Isolatoren, insbesondere Glas und Metall als eine der besten Verbindungslösungen, insbesondere um auch Stabilität bei Druckschwankungen zu gewährleisten, angesehen.

Als Material der Elektrode oder auch einer Unterstützungsstruktur und dem Isolator kann neben Kovar und Borofloat-Glas auch irgendeine Kombination der sich aus der folgenden Tabelle ergebenden Varianten von Kombinationen genutzt werden.

**Tabelle 2: Anodisch bondbare Metalle und Gläser**

| **Metall** | **Chemische Zusammensetzung** |
|---|---|
| Kovar | 54% Fe, 29% Ni, 17% Co |
| Invar | 64% Fe. 36% Ni |
| Alloy 42 | 58% Fe. 42% Ni |
| Titan | |
| **Glas** | **Chemische Zusammensetzung** |
| Borofloat 33 | 81% SiO₂, 13% B₂O₃, 4% Na₂O. 2% Al₂O₃ \|13\| |
| Pyrex 7740 | 80,6% SiO₂, 13% B₂O₃. 4% Na₂O, 2,3% Al₂O₃. 0.1% Sonstiges \|14\| |
| Foturan 42 | 75-85% SiO₂, 7-11% LiO₂. 3-6% K₂O, 3-6% Al₂O₃, 1-2% Na₂O, 0-2% ZnO. 0,3% Sb₂O₃, 0.1% Ag₂O. 0.02% CeO₂ \|15\| |

Durch die möglichen Kombinationen der Fügeverfahren und Materialien sind prinzipiell 4 Lösungsvarianten für die Kombination von Tragstruktur, z.B. in Form eines Sockels für den Isolator und die darauf angebrachte Kombination von Isolator mit darauf angebrachter Elektrode ausführbar, wie folgende Tabelle 2 zeigt.

| **Lösung** | **Elektrode** | | **Metallsockel** | |
|---|---|---|---|---|
| | **Material** | **Fügeverfahren mit Glas** | **Material** | **Fügeverfahren mit Glas** |
| A | Kovar | Anodisches Bonden | Kovar | Anodisches Bonden |
| B | Nickel | Galvanisches Beschichten | Nickel | Galvanisches Beschichten |
| C | Kovar | Anodisches Bonden | Nickel | Galvanisches Beschichten |
| D | Nickel | Galvanisches Beschichten | Nickel | Galvanisches Beschichten |

| | | | | |
|---|---|---|---|---|
| Abb. 3: Mögliche Ausführungsbeispiele der Ausführung von Isolator (hier Glas), Sockel als Tragstruktur und Elektrode, sowie zugehörige Fügeverfahren. | | | | |

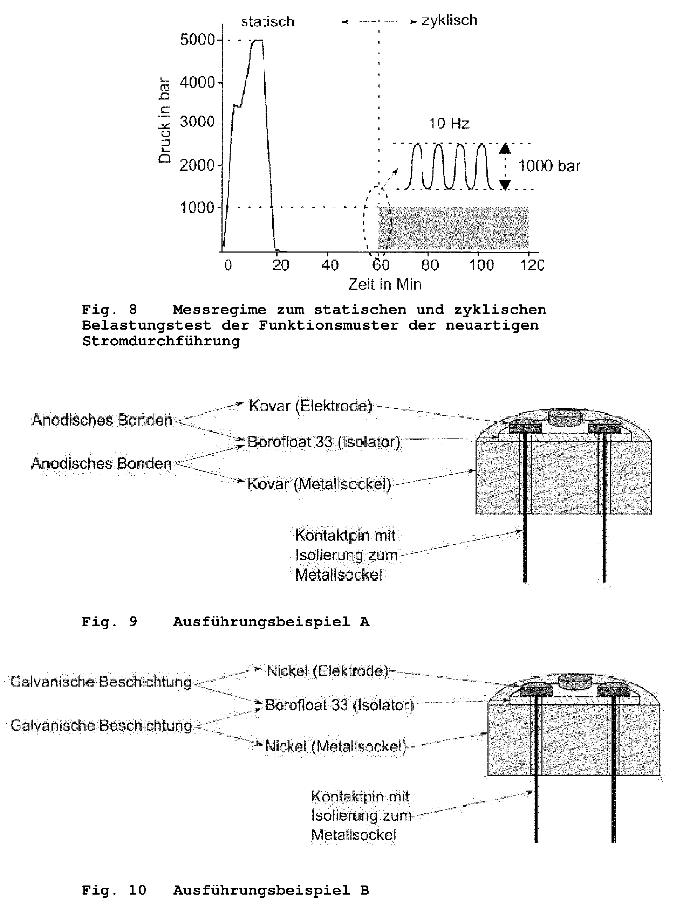

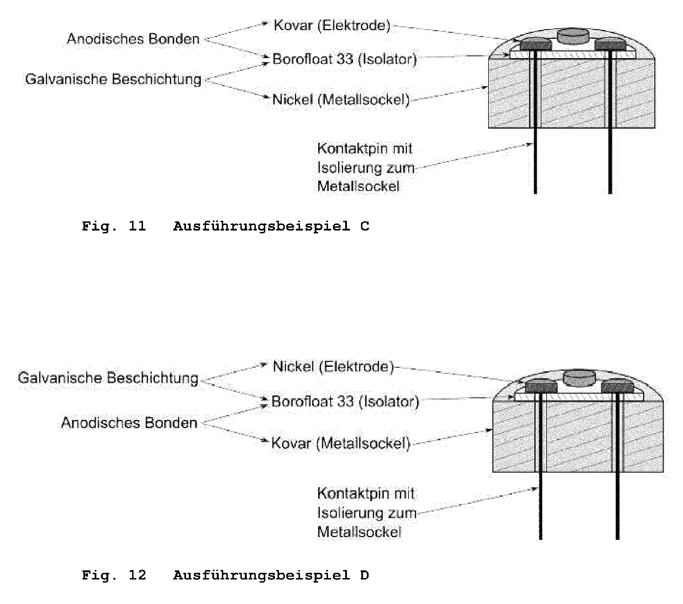

Es ergeben sich bei Favorisierung von Kovar als Metall und Borofloat als Isolator folgende Ausführungsbeispiele (siehe dazu auch die Fig. 9-12):
- A: Die Elektroden und Metallsockel bestehen aus Kovar. Die beiden Teile werden mit Borofloat 33 anodisch gebondet. Die Kontaktpins müssen danach durch Metallsockel und Borofloat 33 an der Elektrode angebracht werden.
- B: Die Elektroden und Metallsockel bestehen aus Nickel. Die beiden Teile werden auf Borofloat 33 galvanisch beschichtet.
- C: Die Elektroden und Metallsockel bestehen aus Kovar und Nickel. Kovar als Elektroden wird mit Borofloat 33 anodisch gebondet. Das Nickel als Metallsockel wird auf die Unterseite des Borofloat 33 galvanisch aufgebracht.
- D: Im Gegenteil zu der Lösung C bestehen Elektroden und Metallsockel in der Ausführungsform D aus Nickel und Kovar. Das Kovar als Metallsockel wird mit Borofloat 33 anodisch gebondet. Das Nickel als Elektroden wird auf die Oberseite des Borofloat 33 galvanisch beschichtet.

Der Metallsockel der elektrischen Durchführung soll in einem Metallgehäuse am Hochdruck-Messplatzt befestigen werden. Das Material des Metallsockels muss mechanisch bearbeitet werden, z.B Drehen, Fräsen, Läppen und Bohren.

Im Falle von D ist zu beachten:
Die vier elektrischen Kontakte werden mit Hilfe von strukturierten Bereichen auf dem Glas galvanisch abgeschieden. Mit Hilfe von Klebstoff und Loten werden die lackierten Kupferdrähte als elektrische Kontakte vor dem Galvanisieren in die durchgebohrten Löcher auf dem Grundkörper und dem Glas-Isolator vorpositioniert

Durch eine theoretische Abschätzung wird eine Beziehung zwischen der Höhe der galvanisierten Nickel-Elektrode h und dem Radius des Loches im Glas-Isolator r bestimmt (h > r).

Durch Ultraschallbearbeitung werden Löcher mit dem Radius von 250 µm in das Glas gebohrt. Die entsprechende minimale Höhe der Nickel-Elektrode ist damit 250 µm.

Jedoch sind auch Formen von Nickel mit deutlich unterschiedlichen Zugfestigkeiten bekannt und zwar im Bereich von 350 N/mm2 bis 1570 N/mm2 angegeben.

Durch Untersuchungen hat sich jedoch gezeigt, dass auch eine nur 40 µm dicke Nickelschicht -bei einem Durchmesser des Bohrlochs von 500 µm bis 5.000 µm noch ausreichend stabil ist.

Das heißt, die mechanische Stabilität der Durchführung wird beim Hochdruck von der plastischen Verformung der Nickelschicht nicht beeinflusst. Daher wird davon ausgegangen, dass für Nickel nach galvanischer Herstellung auch noch geringe Dicken realisierbar sind. Also dass gilt: h kleiner oder gleich r. Wobei h auch 1/10 von r oder dünner sein kann, um dennoch druckstabil zu sein.

Für die Lösung B und C kann das Nickel nur vorher auf Glas galvanisiert werden, danach kann die Nickelschicht mechanisch bearbeitet werden. Durch anodisches Bonden kann Kovar als Metallsockel einfach realisiert werden, da Kovar vor dem anodischen Bonden bearbeitet werden kann.

Aufgrund der mechanischen Konstruktion der elektrischen Durchführung können die elektrisch leitenden Teile in zwei Teile, Elektroden und Kontaktpins, aufgeteilt werden. Für das Einbringen der Kontakpins ist Lösung D besser als Lösung A, weil bei der galvanischen Beschichtung die Kontaktpins gleichzeitig auf die NickelElektroden eingebracht werden können. Mit der Lösung A müssen die Kontaktpins nach dem anodischen Bonden auf die Elektrode kontaktiert werden.

Auch wenn verschiedene Ausführungsbeispiele verschiedene Nachteile haben, sind alle dazu geeignet die Anforderungen der Aufgabe zu erfüllen.

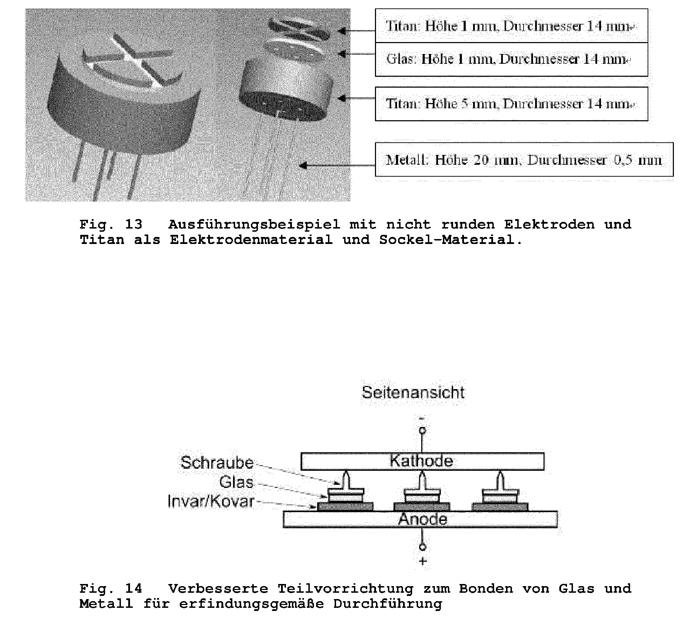

Ein weiterer Aspekt der Erfindung betrifft das Bonden. Um das flächige Kontaktieren von Kovar und Glas gewährleisten zu können, wurde eine optimierte Einspannungsvorrichtung als Teil einer Vorrichtung zum Anodischen Bonden entwickelt. Dieser Teil ist in Fig. 14 dargestellt

Diese Einspannvorrichtung ermöglicht ein homogeneres Bonden an den Kontakflächen von Isolator und Metall.

Weiterhin weist die Vorrichtung eine Regelung des Anspressdrucks (mit Erfassung der Ausdehnung der Materialien) und Vorrichtungen zur Einstellung von sehr flachen Transienten von Spannung und Temperatur.

Bezüglich des Bondens ist vorteilhaft zu beachten:
Um das Kovar als Kathode zu schützen, kann eine Oxidationsschicht auf Kovar vor dem Bonden aufgebracht werden. Durch das Erwärmen auf 450°C für 5 Minuten kann eine Oxidationsschicht von Kovar in einer Höhe von 5 nm erzeugt werden.

Bezüglich der galvanischen Aufbringung von Elektroden ist zu beachten:
Um die Qualität der Abscheidung von Nickel auf Glas zu erhöhen, können die Oberflächenrauigkeit des Glases optimiert werden. Mit der vergrößerten Haftung zwischen Startschicht und Glas wird die mechanische Stabilität der Glas-NickelVerbindung verstärkt.

Durch die Optimierung der Flächengröße der Startschicht kann die mechanische Stabilität beim Druck verbessert werden, da die Haftung zwischen Startschicht und Glas mit vergrößerter Fläche verstärkt wird.

Eine besonders vorteilhafte Ausführungsform sieht das anodische Bonden von dickem Kovar und Glas vor.

Wenn zylinderförmiges Kovar und Glas gebondet werden können, wird die Stahlunterstützung der elektrischen Durchführung nicht mehr gebraucht. Außer der Reduzierung der Herstellungskosten wird die mechanische Eigenschaft der elektrischen Durchführung verbessert, da der Fügeschritt von Kovar und Stahlunterstützung nicht nötig ist.

Eine erfindungsgemäße Variante des Herstellungsverfahrens gemäß Bonden sieht vor Wechselspannung für das beidseitige Bonden des Isolators (z.B. Glas) vorzusehen. Durch die Wechselspannung werden zwei Seiten des Glases gleichzeitig mit Kovar gebondet.

Nach dem Test erfüllt die elektrische Durchführung folgende wichtige Anforderungen:
_ Druckstabilität > 5000 bar
_ Abdichtung gegen das Messmediums Silikonöl > 5000 bar Isolationswiderstand der elektrischen Kontakt > 10 M
_ Druckabhängigkeit des Kontaktes < 0,001

Zudem wurde ein Preis der Materialien von im Bereich von wenigen Euro eingehalten.

### Literatur

[1] Heinickel, P.; Werthschützky, R.: Functionality of a novel overload resistant silicon high pressure sensing element. In: IEEE Transducers Conference 2009 Proceeding, June, 21 th-25th, Denver, USA, 2009.
[2] Dziuban, J.A.: Bonding in microsystem technology. Springer, 2006.
[3] Briand, D.; Weber, P.; de Rooij, N.F.: Metal to glass anodic bonding for microsystems packaging. TRANSDUCERS 2003 - The 12th International Conference on Solid Stale Sensors Actuators and Microsystems, Boston, June 8-12,2003

## Patentansprüche

1. Elektrische Durchführung mit umgebender Isolierung, insbesondere für einen Drucksensor, wobei die Durchführung auf der Hochdruckseite einen Isolatorbereich mit mindestens einer Durchführung für mindestens einen elektrischen Leiter aufweist und welche auf der Hochdruckseite mindestens eine die Fläche der Bohrungsöffnung abdeckende und zumindest teilweise auch überdeckende elektrisch leitende Elektrode aufweist.

2. Elektrische Durchführung nach Anspruch 1, **dadurch gekennzeichnet, dass** unterhalb der Elektrode nochmals eine gesonderte Isolatorschicht vorgesehen ist und die flächige Ausdehnung von Isolatorschicht und Elektrode größer sind, als die Querschnittsfläche der Bohrung für den mindestens einen elektrischen Leiter.

3. Elektrische Durchführung nach Anspruch 1 oder 2, **dadurch gekennzeichnet, dass** auf der Niederdruckseite der Isolatorschicht eine metallische Stützstruktur, besonders bevorzugt aus einem mit dem Material der Isolatorschicht durch anodisches Bonden verbindbaren Metall, vorgesehen ist.

4. Elektrische Durchführung nach einem der Ansprüche 1 bis 3, **dadurch gekennzeichnet, dass** die mindestens eine Elektrode aus dem gleichen Material gefertigt ist, wie die Stützstruktur unterhalb der Isolatorschicht oder aus einem mit der Isolatorschicht bondbaren Material oder aus einem durch einen Abscheidungsprozess, wie Galvanik oder Sputtern oder vergleichbare Prozesse auf dem Isolator abscheidbaren, elektrisch leitfähigen Material ausgeführt ist.

5. Herstellverfahren für eine der elektrischen Durchführungen gemäß einem der oberen Ansprüche, **dadurch gekennzeichnet, dass** zur Verbindung von Elektrode und Isolationsschicht oder/und Isolationsschicht und Stützstruktur das anodische Bonden verwendet wird.
